Europäisches Patentamt

(19) European Patent Office

Office européen des brevets

(11) Publication number: **0 085 491**

**A1**

(12) **EUROPEAN PATENT APPLICATION**

(21) Application number: **83300164.7**

(22) Date of filing: **13.01.83**

(51) Int. Cl.³: **A 01 M 21/04**
**A 01 M 15/00**

(30) Priority: **14.01.82 AU 2288/82**

(43) Date of publication of application:
**10.08.83 Bulletin 83/32**

(84) Designated Contracting States:
**FR GB IT**

(71) Applicant: **Morris, Warwick Louis**
**Lot 4 C/-Bowling Club Greenacre Road**
**South Hurstville New South Wales 2221(AU)**

(72) Inventor: **Morris, Warwick Louis**
**Lot 4 C/-Bowling Club Greenacre Road**
**South Hurstville New South Wales 2221(AU)**

(74) Representative: **Walter, Douglas Ernest et al,**
**HASELTINE LAKE & CO. 28, Southampton Buildings**
**London WC2A 1AT(GB)**

(54) **A burner.**

(57) A mobile burner (10) to burn the grass of bowling greens, the burner (10) includes a mobile hood (14) having an open horizontal face and a plurality of nozzles (15) which exhaust flame and gas into the hood (14) to burn the grass confronting said open face.

FIG.1

EP 0 085 491 A1

"A BURNER"

The present invention relates to equipment to aid in the caring of lawns, particularly greens used for sports.

Traditionally each year bowling greens are skinned of their surface, that is the top layer of soil, together with vegetation is removed. This process is carried out in order to encourage the growth of new leaf. However, as the top layer of soil must be replaced which necessitates levelling of the green.

The above method has two major disadvantages which are:

Firstly, the above method is costly as it is labour intensive and time consuming. In particular levelling of the green is expensive. Secondly, as the grass must again grow and provide new leaf to form the new green, the following bowling season is thus shortened in order to give the green sufficient time to grow. This problem is even greater in cooler climates where the time within which the new leaf must grow is shorter.

It is the object of the present invention to overcome or substantially ameliorate the above disadvantages.

There is disclosed herein a mobile burner to aid in the caring of lawn, said burner comprising a hollow hood having a generally horizontal open face, wheels attached to said hood to locate said face at a predetermined distance from said lawn, and a plurality of burners each having an exhaust within said hood to deliver flame and exhaust gases to said face.

A preferred form of the present invention will now be described by way of example with reference to the accompanying drawings wherein:

Fig. 1 is a schematic perspective view of a burner to aid in the caring of bowling greens, and

Figs. 2 and 3 schematically depict burner nozzles to be employed in the burner of Fig. 1.

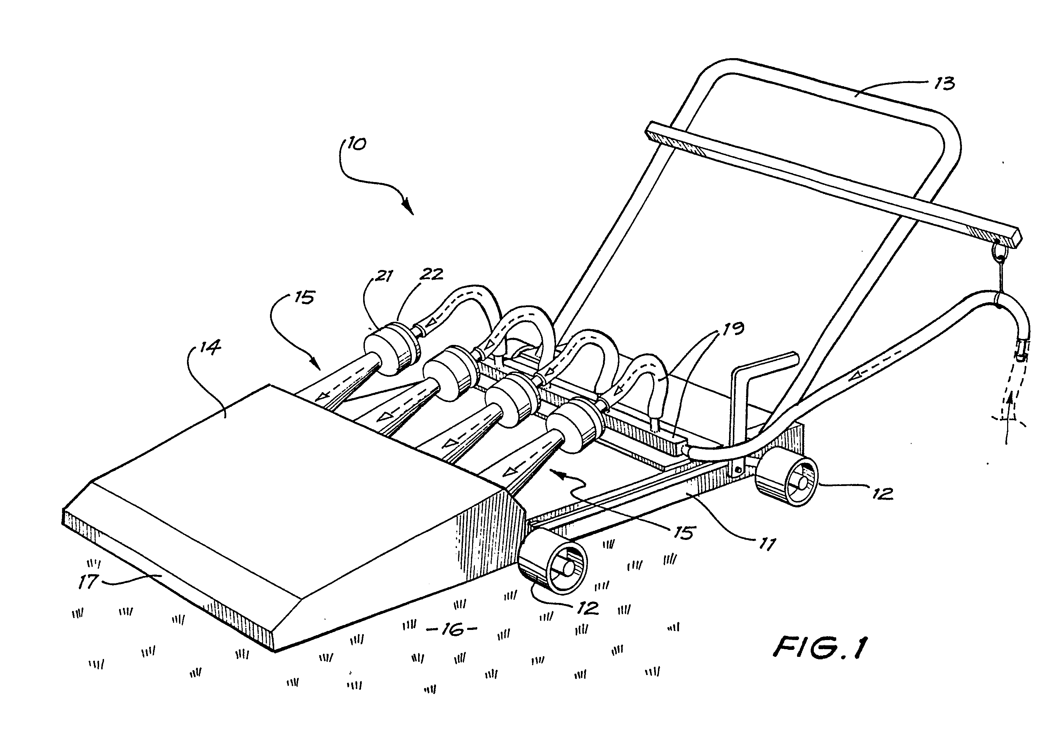

In Fig. 1 there is depicted a mobile burner 10 which is adapted to burn off the top layer of vegetation on bowling greens. The burner 10 includes a mobile frame 11 having four wheels 12 which engage the green upon which the burner 10 moves. There is further extending from the flame 11 a handle 13 which enables a user of the burner 10 to push the burner 10 over the lawn surface. Mounted on the forward end of the burner 10 is a hollow hood 14 which communicates with a plurality of burner nozzles 15 which deliver flame and hot exhaust gases to the interior of the hood 14. The flame and hot gases are directed towards the lawn 16 thereby burning off the exposed layer of vegetation. It should be particularly noted that the hollow hood 14 has an open face adjacent the lawn 16. To aid in the flow of exhaust gases through the hood 14 the forward end 17 could be provided with slots or openings through which the expended exhaust gases could exit.

The burner nozzles 15 each communicate with a conduit 19 which is connected to a supply of fuel such as compressed gas.

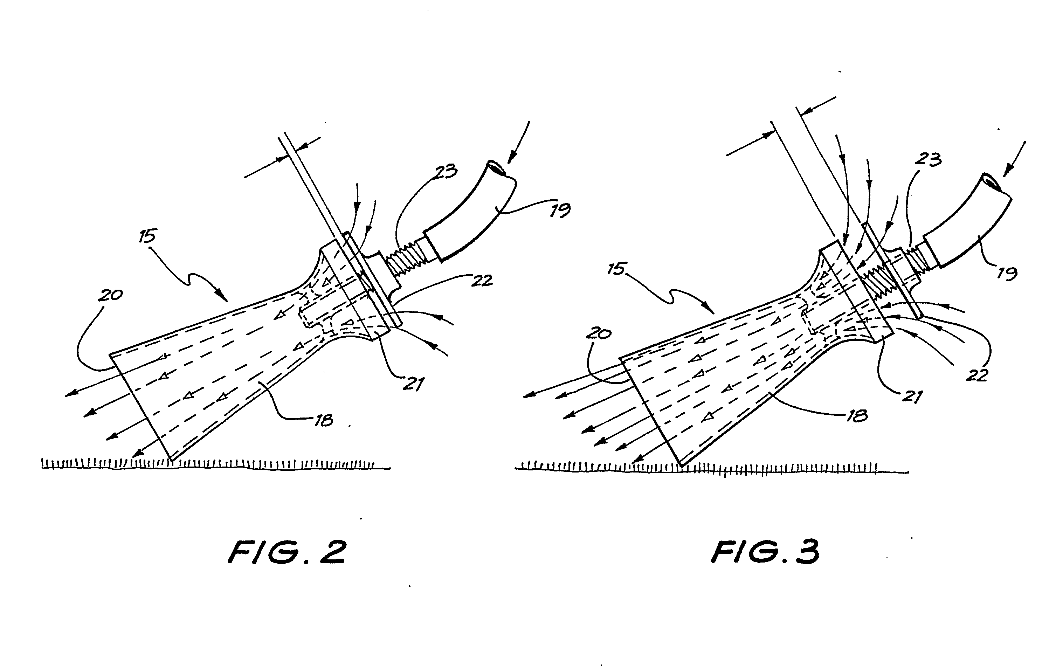

Now with reference to Figs. 2 and 3 wherein one of the nozzle burners 15 is illustrated. Each nozzle burner 15 includes a nozzle throat 18 to which fuel is delivered by means of a conduit 19. Each nozzle throat 18 has an open exit 20 and open inlet 21 which is partly blocked by means of an adjustable plate 22. The plate 22 is mounted on a threaded member 23 so that the relative position of the plate 22 to the inlet 21 may be adjusted in order to determine the amount of air delivered to the interior of the burner throat 18.

In operation of the above device a user of the burner 10 provides a fuel to the nozzles 15, whereat air is mixed with the fuel and is ignited to deliver flame and hot gases to the interior of the hood 14. Thereafter the user of the burner 10 propels the burner 10 across the lawn by means of pushing the handle 13.

It should be appreciated that the flame should be adjusted so as not to entirely destroy the grass.

As a further modification, the burner 10 could be provided with a blower to deliver air under pressure to a nozzle that receives the fuel.

The above preferred form of the present invention eliminates the need to regularly level greens, whilst also enabling the bowling green to be used earlier.

A still further, but unexpected advantage, is the formation of lime in the soil due to the chemical reaction caused by the heat.

0085491

## CLAIMS

1.  A mobile burner to aid in the caring of lawn, said burner comprising a hollow hood having a generally horizontal open face, wheels attached to said hood to locate said face at a predetermined distance from said lawn, and a plurality of burners each having an exhaust within said hood to deliver flame and exhaust gases to said face.

2.  The burner of claim 1, wherein said wheels are attached to said hood so as to enable relative movement therebetween to adjust the height of the hood.

3.  The burner of claim 1 or 2, wherein said burner includes a plurality of burner nozzles which receive a fuel to be mixed with air.

4.  The burner of claim 3, wherein each nozzle includes an aperture into which air is drawn to be mixed with the fuel; and wherein said aperture is adjustable in area to regulate the volume of air delivered to the interior of the nozzles.

5.  The burner of any one of claims 1 to 4, further including a flexible conduit attached to said burner so as to deliver fuel thereto from a fuel reservoir.

6.  A burner substantially as hereinbefore described with reference to the accompanying drawings.

0085491

*FIG.1*

FIG. 2

FIG. 3

00854491

European Patent
Office

**EUROPEAN SEARCH REPORT**

**0085491**
Application number

EP 83 30 0164

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 382 864 (R.B. FANNIN et al.) * Column 2, lines 11-72 ; figures 1-5 * | 1-3 | A 01 M 21/04 A 01 M 15/00 |
| X | CA-A- 933 826 W. YAREMCIO) * Claim 1 ; figures 1-3 * | 1-3 | |
| X | US-A-1 707 845 (J.A. CASWELL) * Page 1, lines 27-63 ; figures 1-3 * | 1-3 | |
| A | US-A-3 805 766 (A.F. HAMMON) * Column 3, lines 27-32 ; figures 1, 2 * | 1,3,5 | |
| A | DE-A-2 640 460 (EXXON RESEARCH) | | **TECHNICAL FIELDS SEARCHED (Int. Cl. 3)** |
| | ----- | | A 01 G 1/12 A 01 M 15/00 A 01 M 21/04 |

The present search report has been drawn up for all claims

| Place of search | Date of completion of the search | Examiner |
|---|---|---|
| BERLIN | 22-03-1983 | SCHOFER G |

EPO Form 1503. 03.82